# EUROPEAN PATENT SPECIFICATION

(11) **EP 3 850 916 B1**
(45) Date of publication and mention of the grant of the patent: **24.07.2024**
(21) Application number: 19768804.7
(22) Date of filing: 12.09.2019
(51) Int. Cl.: H05B 45/00, F21S 8/08, F21V 23/04, F21W 131/103, G01W 1/14, H05B 47/175

(54) **LUMINAIRE SYSTEM FOR DETERMINING WEATHER RELATED INFORMATION**
LEUCHTENSYSTEM ZUR BESTIMMUNG VON WETTERBEDINGTEN INFORMATIONEN
SYSTÈME DE LUMINAIRE PERMETTANT DE DÉTERMINER DES INFORMATIONS MÉTÉOROLOGIQUES

(30) Priority: 12.09.2018 NL 2021612
(43) Date of publication of application: 21.07.2021
(73) Proprietor: SCHREDER SA, 1190 Bruxelles (BE)
(72) Inventor: SECRETIN, Laurent, 4350 REMICOURT (BE)
(74) Representative: Arnold & Siedsma
(86) International application number: PCT/EP2019/074380
(87) International publication number: WO 2020/053342

(56) References cited:
- WO-A1-2010/068538
- WO-A1-2014/133946
- WO-A1-2014/180647
- WO-A1-2015/128192
- US-A1- 2007 211 013
- US-B1- 9 900 962
- US-B2- 9 192 030

## Description

### FIELD OF INVENTION

The present invention relates in general to a luminaire system for lighting purposes and for determining weather related information. Particular embodiments relate to a luminaire system in the form of a luminaire head or in the form of an outdoor lamp post.

### BACKGROUND

Lamp posts - also known as street lights, light poles, or street lamps - with a dedicated device having an integrated emitter and receiver for determining weather information are known in the art. Lamp posts comprising a twilight sensor for determining when it is dark, are also known in the art. Lamp posts with a camera for traffic monitoring, are also known in the art.

Examples of such lamp posts are described in WO 2014/180647, US 9,900,962, and WO 2014/133946.

WO 2014/180647 A1 discloses a luminaire for road illumination, said luminaire comprising a housing containing a light source provided with optics. The luminaire further comprising a sensor unit adapted to measure optical properties of the surrounding of the luminaire and a calculation unit adapted to calculate the parameters for controlling the light output of the luminaire based on the optical properties measured by the sensor unit. According to the invention, the sensor unit is adapted to measure specular and diffuse reflection properties of the surrounding of the luminaire. These optical properties allow determining the type of weather or the road condition and adjustment of the light output of the luminaire, thus improving the road safety.

US 9 900 962 B1 discloses an illumination system and an illumination method. An environmental condition of a position of an illumination apparatus is detected, so as to produce an environmental information. A corresponding illumination result prediction model is selected according to a first environmental information. An illumination character of an illumination light is adjusted according to the illumination result prediction model and the first environmental information.

WO 2014/133946 A1 discloses a system including at least one lighting device, e.g., at least one LED luminaire, and a control circuit configured to control a spectral output produced by the at least one lighting device responsive to environmental information about an area illuminated by the at least one lighting device. The control circuit may be configured to control a color temperature of the illumination responsive to the environmental information. In some embodiments, the control circuit may be configured to lower the color temperature of the illumination responsive to the environmental information indicating a level of reflected light and/or a weather condition, such as precipitation, correlated with the presence or likely presence of glare.

### SUMMARY

The invention is defined by a luminaire system in accordance with claim 1. Further preferred embodiments are defined in the dependent claims.

The object of embodiments of the present invention is to provide a luminaire system for lighting purposes, whilst at the same time being capable of performing accurate determination of weather conditions, for example in terms of visibility and/or precipitation conditions and/or a state (e.g. reflectivity) of the surface intended to be illuminated and/or a distance between the light sources and said surface.

According to a first aspect the present invenlion provides a luminaire system comprising: a support comprising a plurality of light sources for creating a light beam; at least one optical receiver configured for detecting a portion of said light beam which is reflected or back-scattered (e.g. by diffusing sources in the air. such as rain. fog, etc., or by a surface to be illuminated, such as a road surface); a control means operatively connected to said at least one optical receiver for obtaining data related to said detected light beam portion. The control means is further configured for determining, based on the obtained data, information related to at least one of: ambient visibility, precipitation, a state of the surface intended to be illuminated by the luminaire system, a distance between the plurality of light sources and said surface.

In that manner the light sources and the at least one optical receiver are integrated in a luminaire system in an improved manner compared to prior art solutions.

It is an advantage of embodiments of this luminaire system, that it not only allows to provide a light beam for illumination purposes, but also allows to determine weather conditions such as for example visibility conditions (e.g. qualitatively and/or quantitatively) and/or precipitation conditions (e.g. dry, rain, fog, snow) and/or a state of the surface to be illuminated (dry, flooded, covered by ice, by snow, by mud, etc.) and/or a distance between the plurality of light sources and said surface.

At least a portion of the light rays of the light beam are visible light rays. The light beam may be delimited by an irregular conical surface, and may contain light rays in different spectra. The light beam may be formed by different sub-beams of light rays, e.g. different sub-beams of light rays in different spectra.

It is a particular advantage of embodiments of this luminaire system that it does not use a dedicated integrated emitter-receiver device for determining weather conditions, but that it can use one or more of the standard light sources already present on the support in existing luminaires, or one or more specific light sources added to an existing support with light sources and chosen for allowing a good detection by the optical receiver. The system also allows using as the optical receiver a sensor or receiver for purposes other than mere weather-related purposes. This is especially true when using an image sensor or a camera both for traffic monitoring for example as well as for determining weather conditions.

The luminaire system may be comprised in a luminaire head, in which case the control means may also be embedded in the luminaire head, may be mounted on top of the luminaire head, e.g. on top of a housing of a luminaire head, and more generally may be provided anywhere in and/or on the luminaire head. It is an advantage that such luminaire system is compact and easy to install, since only a power cable needs to be connected to this luminaire system. Alternatively or additionally, the control means may be arranged outside of the luminaire head, for example inside a lighting pole of a streetlight system, at a distance of the lighting pole, etc.

The portion of the light beam which is reflected or back-scattered and received by the optical receiver will be different depending on e.g. diffusing sources in the air, such as rain, fog, etc., the conditions of the surface to be illuminated, etc. More in particular, any characteristics such as the polarization and/or the intensity and/or the color of the light beam may be different depending on the properties of environment through which the light beam passes. These differences will allow deriving information about any one or more of ambient visibility, precipitation, a state of the surface intended to be illuminated by the luminaire system, a distance between the plurality of light sources and said surface.

Preferred embodiments thereof are disclosed in the dependent claims.

According to an exemplary embodiment the luminaire system comprises a housing accommodating the support and the at least one optical receiver. The housing may correspond with the housing of the luminaire head. In that manner a compact integrated system is obtained.

According to an exemplary embodiment the optical receiver comprises one or more optical receiving elements, wherein each optical receiving element is configured to measure a light intensity of the detected portion of the light beam. When a plurality of optical receiving elements is present, the optical receiving elements may be arranged according to a regular pattern, for example an array with at least one row and at least two columns of optical receiving elements. Preferably the optical receiver comprises a row of optical receiver elements extending along a line, and such that, in the mounted positon of the luminaire system, the light emitted by at least one of the plurality of light sources is received on said line. Changes in ambient visibility and/or precipitation and/or changes in a state of a surface to be illuminated and/or changes regarding the distance between said surface and the plurality of light sources, will influence the intensity and/or direction and/or the color and/or the polarization of the light beam which is reflected by diffusing sources and/or said surface. When a plurality of optical receiving elements is used both intensity and direction changes may be detected, optionally in combination with color and/or polarization changes, allowing to determine information related to any one of the above mentioned conditions. For example, the measured intensity may indicate that it has started raining or that a surface is covered with snow. Also, depending on the distance between the surface and the plurality of light sources, a light beam reflected on said surface will be received at a different location of the optical receiver. When the optical receiver comprises a plurality of optical receiving elements arranged across a surface of the optical receiver, depending on said distance, different optical receiving elements will detect the reflected light beam, and the detection performed by the plurality of optical receiving elements will allow determining information about the distance.

According to an exemplary embodiment the control means is configured to control the plurality of light sources to be subsequently in at least a first state and a second state different from the first state, and to control the at least one optical receiver such that the detection is performed at one or more first moments in time in the first state and at one or more second moments in time in the second state. Based on a difference between the detected signals in the first state and in the second state, an accurate indication of the information related to ambient visibility and/or precipitation and/or the state of the surface to be illuminated and/or a distance between the plurality of light sources and said surface, can be obtained. Indeed, in that manner, the influence of external light sources of the environment can be eliminated. For example, the first state may correspond to an activated state of at least one of the plurality of light sources, and the second state may correspond to a deactivated state of the at least one of the plurality of light sources. In another embodiment, the first state may correspond to an activated state of at least one of the plurality of light sources, and the second state may correspond to a dimmed state of the at least one of the plurality of light sources. In yet another embodiment, the first state may correspond to a deactivated state of at least one of the plurality of light sources, and a second state may correspond to a dimmed state of the at least one of the plurality of light sources. In yet another embodiment, the first state may correspond to a first dimmed state of at least one of the plurality of light sources, and the second state may correspond to a second dimmed state of the at least one of the plurality of light sources, said second dimmed state being different from said first dimmed state. In another embodiment, the first state may correspond to an activated state (optionally dimmed) of only some of the plurality of light sources, and the second state may correspond to an activated (optionally dimmed) or deactivated state of all of the plurality of light sources. In another embodiment, the first state may correspond to at least one of the plurality of light sources emitting a first portion of a modulated light beam, and the second state may correspond to the at least one of the plurality of light sources emitting a second portion of a modulated light beam. The skilled person understands that many variations are possible as long the difference between the obtained data in the first and second state allows reducing or eliminating the influence of external light sources.

According to a further developed embodiment the control means is configured to control the plurality of light sources between at least a first state and a second state different from the first state, and to control the at least one optical receiver such that the detection is performed first at one or more first moments in time in the first state, subsequently at one or more second moments in time in the second state, and next at one or more third moments in time again in the first state. This allows to further increase the accuracy.

According to an exemplary embodiment the control means is configured to activate and deactivate at least one light source of said plurality of light sources, and to control the at least one optical receiver such that the detection is performed at one or more first moments in time when said at least one light source is activated and at one or more second moments in time when said at least one light source is deactivated. Based on a difference between the detected signals when the at least one light source is activated and deactivated an accurate indication of the information related to ambient visibility and/or precipitation and/or the state of the surface to be illuminated and/or a distance between the plurality of light sources and said surface, can be obtained. Indeed, in that manner, the influence of external light sources of the environment can be reduced or eliminated.

According to an exemplary embodiment, the control means is further adapted
- for activating, preferably in a repeating manner, at least one of the plurality of light sources for emitting a light beam, preferably during a first time period smaller than 100 ms, in a non-lighting-mode of the luminaire system; and/or
- for deactivating, preferably in a repeating manner, at least one of the plurality of light sources, preferably during a first time period smaller than 100 ms, in a lighting-mode of the luminaire system.

Preferably, the control means is configured to control the at least one optical receiver such that the detection is performed both during the first time period and outside of the first time period. By only briefly activating or deactivating at least one of the plurality of light sources, the normal operation of the plurality of light sources is not hindered, and an accurate determining of the information can be achieved based on a detection by the optical receiver in two different states of the at least one of the plurality of light sources.

According to an exemplary embodiment, the control means is further adapted
- for repeatedly activating at least one of the plurality of light sources for emitting a light beam, preferably during a first time period smaller than 100 ms, and for deactivating said at least one light source, preferably during a second time period in between two first time periods, said second time period being larger than 900 ms, in a non-lighting-mode of the luminaire system; and/or
- for repeatedly deactivating at least one of the plurality of light sources, preferably during a first time period smaller than 100 ms, and for activating said at least one light source, preferably during a second time period in between two first time periods, said second time period being larger than 900 ms, in a lighting-mode of the luminaire system.

The control means is configured to control the at least one optical receiver such that the detection is performed during the first and second time periods. By repeatedly activating and deactivating at least one of the plurality of light sources, a very accurate and continuous determining of the information can be achieved based on repeated detections by the optical receiver in different states of the at least one of the plurality of light sources.

The first time period may be smaller than 10 ms or even smaller than 1 ms, especially in case of light emitting diodes (LEDs). More generally, the first time period may be relatively small as long as it is sufficient for performing the detection. It is an advantage that LEDs can be activated and deactivated in a fast manner and that an optical receiver has a sufficiently short reactivity time, such that detection can be performed in a manner which is invisible to the human eye. Such detections may be repeated for example 1 to 60 times per hour, 24 hours/day, 7 days/week, while requiring only a limited amount of power. It is noted that the frequency may vary depending on e.g. the weather conditions, and that the detections may also be performed on demand, see further. The second time period may be larger than 10 seconds, or larger than 30 seconds, or larger than 1 minute, or larger than 5 minutes, or larger than 1 hour.

According to an exemplary embodiment, the luminaire system further comprises a drive means for powering said plurality of light sources. The control means may be adapted for activating or deactivating or otherwise controlling the drive means, for example for operating the drive means in a modulated or pulsed manner. The control means or a portion thereof may be integrated in the same housing as the drive means, or may be added as one or more pluggable modules to the driver housing. Alternatively, the drive means and the control means may be separate modules included in separate housings.

According to an exemplary embodiment, the drive means is adapted for providing a modulated power signal to all or to at least one of the plurality of light sources for creating a modulated light beam or a light beam with a modulated component, and the luminaire system further comprises a demodulator for demodulating a signal obtained from the at least one optical receiver, and the control means is further adapted for extracting said information based on the demodulated signal. Any suitable modulation technique may be used, for example pulse-width-modulation (PWM) or amplitude modulation (AM). According to an exemplary embodiment, the modulated power signal is a pulse-width modulated (PWM) power signal. The demodulator may be provided anywhere in the luminaire system, e.g. in or on the luminaire head, in or on the light pole, or at a location remote from the light pole.

The modulated power signal will be transmitted and/or reflected and/or scattered in a different manner depending on e.g. the weather conditions, a condition of the road surface, a distance between the road surface and the plurality of light sources, etc. Thus, also the demodulated signal will be different depending on these conditions, and will allow deriving information about those conditions. Further, by using a modulated power signal, the light source will be in different states which is useful for calibration purposes, and in particular for removing the influence of external light sources.

According to an exemplary embodiment, the control means may be configured to control the plurality of light sources and the at least one optical receiver, such that a detection is performed on demand, e.g. when the weather conditions fulfil certain criteria. To that end the control means may be configured to receive external data, e.g. weather related data, and to control the plurality of light sources and the at least one optical receiver accordingly. In addition or alternatively, the luminaire system may comprise one or more sensors capable of sensing weather related data, and the detection may be performed when the sensed weather data fulfills certain criteria.

According to an exemplary embodiment each or at least some of the plurality of light sources comprise a plurality of light emitting elements. It is an advantage of using a plurality of light emitting elements that failure of one of these elements does not necessarily imply failure of the entire light source.

According to an exemplary embodiment each or at least some of the plurality of light emitting elements are light emitting diodes. It is an advantage that light emitting diodes (known as LEDs) have a high power efficiency, thus providing a power-efficient illumination system. Another advantage of LEDs is that they can be activated during a very small time period (e.g. in the order of 1 ms or even less). For example, when determining weather conditions during daytime, one or more light sources of the plurality of light sources may be activated during a very short time period which is not visible to the naked eye.

According to an exemplary embodiment at least one of the plurality of light sources comprises a laser. The advantage of using a laser is that a narrow collimated beam can be obtained, so that the power density is higher. Depending on the type of optical receiver, it may be advantageous to use either a narrow collimated beam (such as a laser) or a wider beam (such as a LED). More generally, the at least one light source and the at least one optical receiver may be matched to each other in order to improve the detection results. It is noted that it is also possible to use a combination of different types of light sources for the detection.

According to an exemplary embodiment the luminaire system further comprises a plurality of optical elements associated with the plurality of light sources. These optical elements may be flexible optical elements or rigid optical elements. These optical elements are typically arranged in front of the light sources, and thus also mechanically protect the light sources or light elements. At least one of these optical elements may be shaped to spread or diffuse the light being emitted into a relatively wide beam. At least one of these optical elements may be shaped so as to direct the light beam being emitted into a relatively narrow beam. By orienting the relatively narrow beam in an appropriate direction the detection by the optical receiver can be improved.

In a particular embodiment, the optical elements comprise lenses, collimators, reflectors, diffusers, or any combination thereof. In an advantageous embodiment, the optical elements comprise lenses. For example, the plurality of light sources may be an array of LEDs arranged on a PCB, and an array of lenses may be integrated in one integral lens plate which is arranged over the array of LEDs. The array of lenses may be an array of the same lenses or different lenses. For example, a majority of the lenses may be shaped to spread or diffuse the light being emitted into a relatively wide beam, whilst a minority of the lenses may be shaped so as to direct the light beam being emitted into a relatively narrow beam.

According to an exemplary embodiment the control means is further configured to control the plurality of light sources and/or the at least one optical receiver based on the determined information. For example, the control means may change a state of the plurality of light sources in case of a certain degree of fog and/or in case the determined visibility is lower than a certain threshold value. For example, one or more light sources of the plurality of light sources may be activated or deactivated or dimmed, the shape of the light beam may be changed, the color or color temperature of at least a portion of the light beam may be changed, the intensity of at least a portion of the light beam may be changed, etc. For example, the at least one optical receiver may be controlled such that the frequency of the detection is varied based on the determined information.

According to an exemplary embodiment, the support is or comprises a printed circuit board (PCB). In some embodiments the housing of the luminaire head may form the common support for the plurality of light sources. In other embodiments two PCB's may be provided each containing one or more of the plurality of light sources, and the two PCB's may be mounted on the housing or on a common heat sink.

According to an exemplary embodiment, the at least one optical receiver is arranged at a predefined distance from the plurality of light sources. This allows an optical shield to be placed between the light sources and the optical receiver. The plurality of light sources and the optical receiver may be arranged on the same support or on a different support.

According to another exemplary embodiment, the at least one optical receiver is arranged at a predefined distance from the support. This allows thermal and supply voltage decoupling of the light sources and the optical receiver. This also allows an optical shield to be placed between the support and the optical receiver.

According to an exemplary embodiment, the luminaire system further comprises a receiver optical element associated with the at least one optical receiver, e.g. a receiver lens. The receiver optical element may be adapted to make the receiver receptive to only a narrow region. In an example with a receiver lens, the receiver lens may have an angular opening of less than 60°, less than 50°, less than 40° or even less than 10°. In other embodiments the receiver lens may be configured to have a wide angular opening, e.g. between 100° and 180°. The receiver optical element is preferably arranged and/or oriented for receiving reflected and/or back-scattered light emitted by at least one of the light sources, e.g. a LED light source or a LASER light source.

According to an exemplary embodiment, the receiver optical element may have a first portion for guiding visible light to a first region of the at least one optical receiver, and a second portion for guiding the reflected or back scattered light to a second region of the at least one optical receiver. The first portion and the second portion may be lens portions having a different curvature. Preferably the first region occupies a major portion of the at least one optical receiver, for example in the range from 80% to 95% of the surface area of the at least one optical receiver. Preferably the second region occupies a minor portion of the at least one optical receiver, for example in the range from 5% to 20% of the surface area of the at least one optical receiver. The second portion may be located in the center of the receiver optical element, or near an edge, or may be a peripheral portion of the receiver optical element.

According to an exemplary embodiment, the plurality of light sources comprises at least one first light source adapted for generating light having a first spectrum, and at least one second light source adapted for generating light having a second spectrum different from the first spectrum. The at least one optical receiver may be sensitive to only the first spectrum, or to only the second spectrum, or to both the first and the second spectrum. The at least one optical receiver may comprise a first optical receiver and a second optical receiver having a different sensitivity than the first optical receiver.

According to an exemplary embodiment, the second spectrum has light components in one or more of the following bands: the ultra-violet (UV) band, the visible spectrum band, the near-infra-red (NIR) band, and the infra-red (IR) band, wherein said light components contain in one or more of said bands at least 5% of the total power of said light components.

According to an exemplary embodiment, the second light source is a laser, or a pulsed laser.

According to an exemplary embodiment, the luminaire system further comprises a separate feeding means for powering said at least one optical receiver. Alternatively the drive means may be used to power both the plurality of light sources and the optical receiver.

According to an exemplary embodiment, the at least one optical receiver comprises a photodiode, and/or an array of photo diodes, and/or an image sensor and/or a camera (e.g. a camera including an image sensor). For example, when the optical receiver is an image sensor, the optical receiver comprises a plurality of optical receiver elements in the form of pixel sensors. It is an advantage of luminaire systems with a more advanced optical receiver, e.g. an image sensor, that it not only allows to illuminate a scene and allows to determine weather conditions, but also allows to capture real images or even video at a frame rate in the range from 2 Hz to 50 Hz. Such a luminaire system can be used for example to monitor traffic and/or parking conditions in addition to illuminating and determining weather conditions. When the at least one optical receiver comprises a first and a second optical receiver, the first and second optical receiver may be different, and may be any one of the types mentioned above.

According to an exemplary embodiment, the camera may comprise a 2D- image camera, and/or a 3D-image camera, and/or a time-of-flight (TOF) camera, and/or a stereo-vision-camera, and/or an infra-red (IR) camera, and/or a near-infrared (NIR) camera, and/or a camera capable of detecting both visible light and infrared light. It is an advantage of using IR or NIR light that it is invisible to the human eye, hence is not disturbing a pedestrian or driver of a vehicle when emitting light.

It is another advantage of using IR or NIR light that it can also be used during the daytime without illuminating the environment. It is a particular advantage of using modulated NIR or IR light that it can be used to differentiate between radiation emitted by the sun (as a slowly varying component, for example typically having frequency components lower than 10 Hz) and the modulated light (as a rapidly varying component, for example having frequency components higher than 100 Hz or higher than 1 kHz). In this way, e.g. weather conditions can be reliably determined, despite the presence of sun light.

In embodiments of the invention, the control means may be located in, on or near the luminaire head and/or at a remote location, e.g. in a remote server or in a segment controller controlling a plurality of luminaire heads. The control means may comprise different control portions (e.g. distinct controllers) which do not necessarily have to be at the same location, e.g. some calculations may be done locally in the luminaire head and other calculations may be done in a remote server. For example controlling the drive means may be done locally, whilst the processing of the obtained data may be done remotely. One or more control portions may be integrated in the same housing as the drive means or may be added as one or more pluggable modules to the driver housing. Alternatively, the drive means and the one or more control portions may be separate modules included in separate housings.

According to an exemplary embodiment, the control means is adapted for determining said information based on a spatial analysis of image information obtained from the camera and/or the image sensor.

According to an exemplary embodiment with a camera and/or an image sensor, the control means is adapted for determining said information based on spectral analysis of image information obtained from the camera and/or the image sensor, for example based on color information.

According to an exemplary embodiment, the luminaire system further comprises a memory operatively connected to the control means, and the control means is adapted for storing data received from the at least one optical receiver at different moments in time, and/or for storing data processed by the control means and/or for storing reference data and/or for storing calibration data, and is further adapted for determining said information based on a correlation, e.g. a temporal correlation of said stored data.

According to an exemplary embodiment, the luminaire system further comprises wired or wireless or optical communication means for communicating with other systems, such as vehicle systems, other luminaire systems, mobile devices, sensor systems, etc., and/or for communicating with a remote server, and the control means is further adapted for transmitting the determined information or data (e.g. unprocessed data) obtained from the at least one optical receiver through the communications means. It is an advantage that the luminaire system may be part of a larger system, allowing for example gathering weather information by a plurality of luminaire systems positioned at many different locations, thereby allowing accurate determination of weather conditions over a large region, without having to install dedicated devices. In another example, the luminaire system may be operatively connected to and adapted for transmitting the determined information or data to unmanned/autonomous vehicles, such as autonomous cars, thereby allowing the vehicles to adapt e.g. their speed and/or their headlamp in consequence.

According to an exemplary embodiment, the control means is further adapted for receiving information from at least one other luminaire system and/or from a remote device, e.g. a remote server, a vehicle, etc., and the control means is configured to further control the plurality of light sources and/or the at least one optical receiver based on the information received via the communication means. Such a communication system allows the control means of a certain luminaire to change the light emitted by the plurality of light sources (e.g. by activating, deactivating, dimming, changing of the shape of the light distribution, changing of the color or color temperature of the emitted light, etc.) based not only on information from its own (local) optical receiver, but also based on information obtained e.g. from at least one other optical receiver, e.g. an optical receiver of a neighboring luminaire, or optical receivers of two neighboring luminaires; and/or based on information, e.g. weather information received from a remote device. In the latter case the decision to change the light emitted by the plurality of light sources may for example be based on majority voting or any other suitable decision scheme. Examples of similar possible control techniques are described in Belgian patent application BE 2018/5172 in the name of the applicant.

It is also possible that a remote server decides when to change the light emitted by the plurality of light sources for individual luminaires or for a plurality of luminaires based on information obtained from said plurality of luminaires. Also, the control means may be configured to only activate the optical receiver of a luminaire in the event that predetermined information, such as predetermined weather information, is received. Further, the control means may be configured to determine, based on received weather information, whether the performed detection by the optical receiver is accurate. This may allow determining when an optical receiver is faulty.

According to an exemplary embodiment, the luminaire system further comprises a housing accommodating said support and said at least one optical receiver; which housing may be adapted for preventing a direct optical path between the plurality of light sources and the at least one optical receiver. In this way crosstalk caused by direct light entering the optical receiver can be avoided or reduced.

According to an exemplary embodiment, the housing comprises a cavity accommodating said at least one optical receiver. It is an advantage of this embodiment that a discrete light shield can be avoided, since the cavity walls may act as an optical shield.

According to another exemplary embodiment, the housing further comprises a light shield arranged between the plurality of light sources and the at least one optical receiver. The light shield may be a metal sheet.

According to an exemplary embodiment, the luminaire system is a luminaire head. In this embodiment the support and the optical receiver are incorporated inside the luminaire head. It is advantageous to embed both the support with the light sources and the optical receiver in the luminaire head (as opposed to somewhere in the pole), that such a luminaire head can be provided as a single module which can be produced and tested as a single entity, and in case of failure can be easily and rapidly replaced as a whole.

According to an exemplary embodiment, the luminaire system is a subsystem of a lamp pole, the lamp pole comprising a luminaire head accommodating at least said support and said at least one optical receiver, the lamp pole further comprising a support pole for supporting said luminaire head. This system can be used as a streetlight, for example.

### BRIEF DESCRIPTION OF THE FIGURES

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:
Figure 1 schematically illustrates a first exemplary embodiment of a luminaire system according to the present invention;
Figure 2 schematically illustrates a portion of a variant of the luminaire system of Figure 1 as another embodiment of the present invention;
Figure 3 illustrates a typical sensitivity diagram of a semiconductor image sensor for different wavelengths, known in the art;
Figure 4 schematically illustrates a specific example of an optical receiver and lens arrangement as may be used in embodiments of a luminaire system according to the present invention;
Figure 5 schematically illustrates another specific example of an optical receiver and lens arrangement as may be used in embodiments of a luminaire system according to the present invention;
Figure 6 shows an exemplary hardware block diagram of a luminaire system according to the present invention; and
Figure 7 schematically illustrates another example of an optical receiver and lens arrangement as may be used in embodiments of a luminaire system according to the present invention.

### DESCRIPTION OF EMBODIMENTS

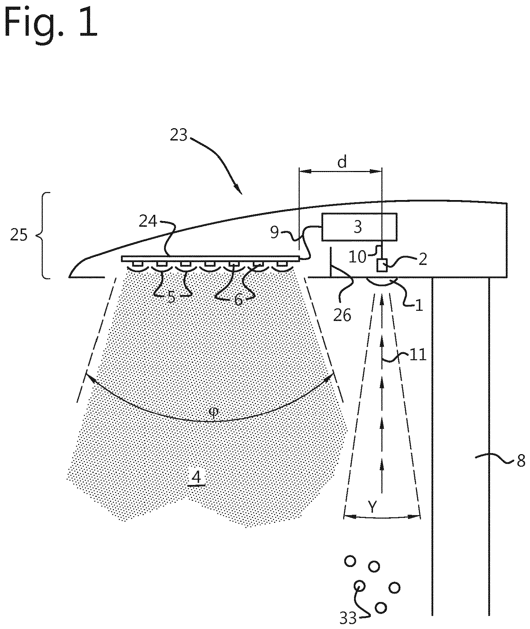

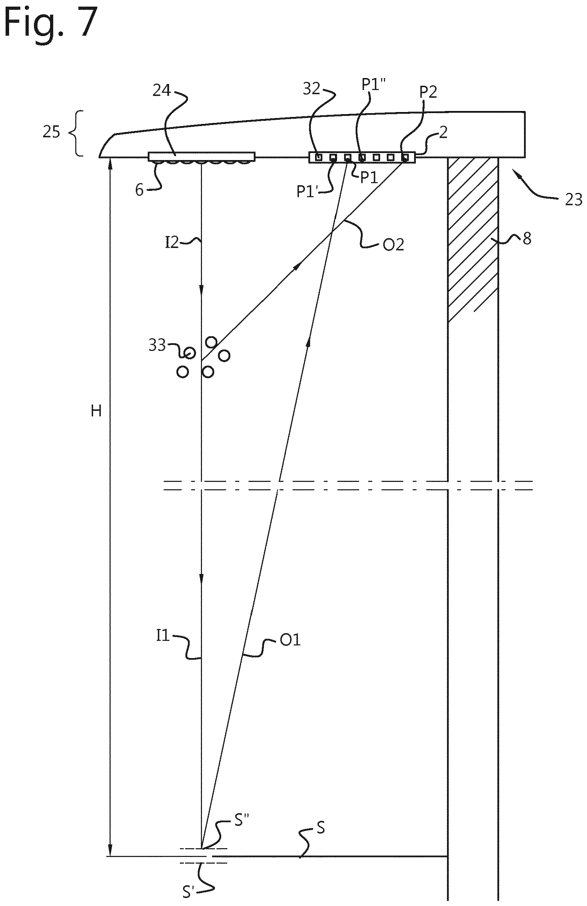

Figure 1 schematically illustrates an exemplary embodiment of a luminaire system 23. The luminaire system comprises a support 24 comprising a plurality of light sources 6 for creating a light beam 4, which is directed downwardly in Figure 1. Optionally optical elements 5 such as lenses are provided to guide the light emitted by the plurality of light sources 6. The optical elements 5 may be integrated in a plate. For example, there may be provided a lens plate with integrated lenses 5 for some or all of the plurality of light sources 6. The optical elements 5 may be the same or different. The luminaire system 23 further comprises at least one optical receiver 2 configured for detecting a portion 11 of the light beam 4 which is reflected or back-scattered by diffusing sources 33, such as e.g. snowflakes or rain drops or smoke particles, or by a surface to be illuminated, e.g. a road surface, a pavement, etc. Characteristics of this reflected or back-scattered light 11 are indicative of weather conditions, in particular visibility and/or precipitation (e.g. snow, rain, fog, etc.). As explained in detail below with respect to figure 7, the characteristics of this reflected or back-scattered light 11 may also be indicative for the state of the surface (e.g. covered with snow, covered with water, etc.) and for the distance between the plurality of light sources 6 and the surface.

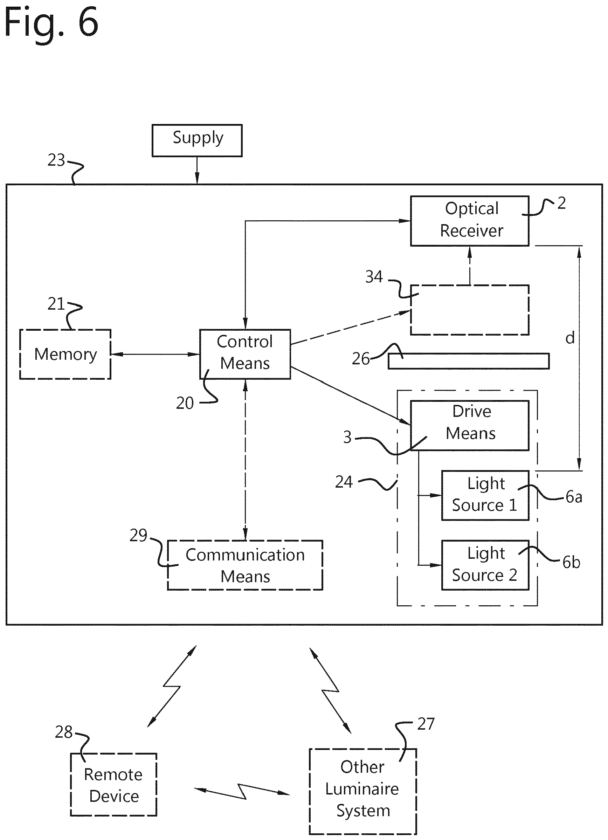

The luminaire system 23 further comprises a control means 20 (not shown in Figure 1 but see Figure 6). The control means 20 is operatively connected (wired or wirelessly) to said at least one optical receiver 2 for obtaining data related to said detected light portion 11, and is configured for determining information related to ambient visibility and/or related to precipitation and/or related to a state of the surface to be illuminated, and/or related to the distance between the plurality of light sources and the surface, based on the obtained data.

The control means 20 may be further configured to control the plurality of light sources 6 and/or the at least one optical receiver 2, based on the determined information. For example, if it is determined that visibility is below a certain threshold value, for example in case of fog, the light sources 6 may be activated (or "switched on"), even during the day. In other cases, the light sources 6 may be dimmed, e.g. to improve visibility. Also, the light sources 6 may be individually controlled so as to change the light distribution, or the position of the optical elements 5 relative to the light sources 6 may be changed to change the light distribution. For example, the light rays may be cut off at high angles to avoid glare in case of fog, e.g. in a similar manner as for the headlight of a car moving from a normal lighting to anti-fog lighting. During the night, when the light sources are normally on, the light sources may be deactivated (or "switched off") during a short time period, for improving the determination. Also, in some embodiments, the frequency of the detection may be changed based on the determined information.

The control means 20 may be located partially or fully in, on or near the luminaire head and/or partially or fully at a remote location, e.g. in a remote server or in a segment controller controlling a plurality of luminaire heads. The control means may comprise different control portions (e.g. distinct controllers) which do not necessarily have to be at the same location. The control means 20 may be split e.g. as follows: an embedded control and processing means to synchronize an emitter/receiver and to compute local e.g. weather condition evaluation, and a separate controller (internal/external) to decide on lighting and/or optical receiver operating conditions in response to the determined information.

In order to activate or deactivate the light sources 6, the control means may control one or more switches (not shown) arranged for providing power from an external supply (not shown in Figure 1 but see Figure 6) to the light sources, for example by opening or closing these switches. Alternatively, the luminaire system 23 may further comprise a drive means 3 for powering said plurality of light sources 6. The drive means may be arranged inside the luminaire head and/or may be mounted in the pole. The drive means 3 may also be used to provide power to the optical receiver 2.

The support 24 may be a printed circuit board, or another kind of holder for holding the plurality of light sources 6.

As schematically illustrated in Figure 1, the at least one optical receiver 2 is arranged at a predefined distance d from the support 24. The distance d may be at least 2 cm or at least 5 cm or at least 10 cm. It is an advantage that the optical receiver 2, e.g. an optical sensor or image sensor is not mounted on the support 24, which allows for a thermal decoupling. However, in other embodiments the optical receiver 2 and the light sources 6 may share a common support.

The luminaire system 23 may further comprise a housing accommodating said support 24 and said at least one optical receiver 2. The housing may have the form of a luminaire head.

The housing is adapted for preventing a direct optical path between the plurality of light sources 6 and the at least one optical receiver 2. This can be implemented in several ways. For example, in an embodiment, the housing comprises a cavity accommodating the at least one optical receiver 2. In this case the walls of the cavity may be sized and shaped appropriately such that no direct light path exists between the light sources 6 and the optical receiver 2. As another example, a light shield 26, for example in the form of a metal plate 26, may be physically arranged between the light sources 6 and the optical receiver 2, for example about halfway between the support 24 and the optical receiver 2. Such a metal plate 26 not only blocks direct light but also advantageously reduces electrical interference (EMC, EMI).

In the case where the luminaire system 23 is a luminaire head, the luminaire head comprises said support 24 and said at least one optical receiver 2 and optionally also said control means 20 or a portion thereof. The control means 20 may be embedded in the luminaire head and/or may be mounted on a housing of the luminaire head, e.g. on top of the housing.

Alternatively, the luminaire system 23 may be a lamp post (also known as street light, light pole, street lamp) comprising a pole 8 and a luminaire head, the luminaire head comprising said support 24 and said at least one optical receiver 2. Optionally, the pole 8 comprises the control means 20 or a portion thereof. However, the control means 20 may also be arranged in the he luminaire head and/or may be mounted on a housing of the luminaire head, e.g. on top of the housing. In both cases, however, the control means 20 is operatively connected to the plurality of light sources 6 and to the at least one optical receiver 2.

In the example of Figure 1, each or at least some of the plurality of light sources 6 comprise a plurality of light emitting elements (not shown). The light sources 6 may be driven jointly or individually. The light emitting elements may be connected in series, or in parallel, or combinations thereof, for example as two or more parallel chains, each chain comprising a plurality of elements.

In preferred embodiments, each or at least some of the plurality of light emitting elements are light emitting diodes, known as LEDs. These elements offer the advantage of having a high power efficiency. LEDs are preferably driven by the drive means 3. The drive means 3 may have an input connected to a mains supply (not shown), and an output connected to the support 24 via a cable 9. The drive means 3 may be an AC to DC convertor providing a predefined or configurable supply voltage, or may comprise one or more current sources adapted for providing one or more predefined or configurable supply currents. The drive means 3 may be a separate unit, or may be an integrated driver directly provided on the support 24.

The luminaire system 23 may further comprise a plurality of optical elements 5, associated with the plurality of light sources 6. The optical element can for example be made e.g. from optical silicone or from polycarbonate or from Polymethylmethacrylate (PMMA). In the example of Figure 1 the support contains seven rows of light sources 6 and each row may contain a plurality of light sources, but of course the invention is not limited thereto, and more than seven or less than seven light sources 6 may also be used. The optical elements 5 may be adapted for diffusing the light rays emitted by the individual light sources 6, thereby creating the light beam 4 having an angle ϕ. For example, the angle ϕ may be an angle in the range from about 30° to about 90°.

In the example of Figure 1, the luminaire system 23 further comprises a receiver optical element 1, e.g. a receiver lens, associated with the at least one optical receiver 2. The receiver optical element 1 is preferably adapted for guiding a relatively narrow beam 11 defined by an angle γ towards the optical receiver 2. For example, the angle γ may be an angle smaller than 20°. In another embodiment, the receiver optical element 1 is adapted for guiding a relative wide beam, e.g. with an angle γ between 100° and 180°.

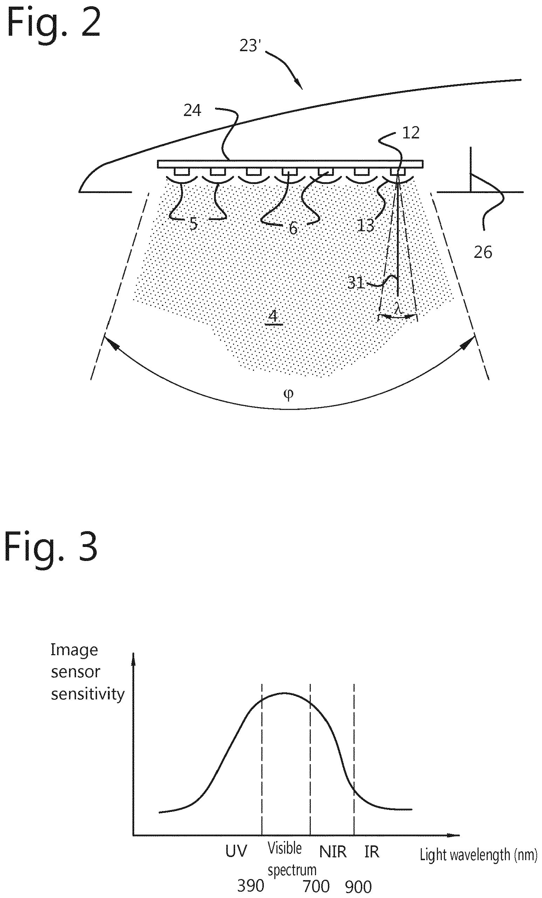

Figure 2 shows a view on a portion of a variant of the luminaire system 23 of Figure 1. What is shown is a portion of a luminaire system 23' in the form of a luminaire head comprising a support 24, e.g. a PCB, comprising a plurality of light sources 6. But in contrast to the light sources of Figure 1 which are all of the same type, the luminaire system of Figure 2 comprises at least two different types of light sources: at least one first light source 6 adapted for generating light having a first spectrum, and at least one second light source 12 adapted for generating light having a second spectrum different from the first spectrum. The second spectrum may for example have light components in the infra-red (IR) band and/or in the near-infra-red (NIR) band and/or in the ultra-violet (UV) band. The second light source 12 may also be a laser or a pulsed laser.

The optical element 13, e.g. a lens element, which may be optionally arranged in front of the at least one second light source 12 may be the same as the optical elements 5 arranged in front of the at least one first light source 6, or may be different. In preferred embodiments, the optical element 13 is adapted for guiding the light emitted by the second light source 12 into a relatively narrow beam, for example having an opening angle λ in the range from about 20° to about 40°. In another embodiment, the optical element 13 is adapted for guiding a relative wide beam, e.g. with an angle λ between 100° and 180°.

Figure 3 illustrates a typical sensitivity diagram of a semiconductor image sensor (e.g. implemented in CMOS technology) for different wavelengths. As can be seen, a CMOS image sensor is sensitive not only to visible light (having wavelengths from about 390 to about 700 nm), but also to UV light and near infrared light.

Embodiments of the present invention may use for example a second light source 12 emitting at least 5% of its power in the NIR range, and may use an optical receiver 2 sensitive in the NIR range, and the control means 20 may be adapted for determining weather conditions based on characteristics of the reflected or back-scattered NIR light received by said receiver 2. It is an advantage that the human eye is not sensitive to the NIR light, thus this light does not distract for example pedestrians or drivers.

The optical receiver may be sensitive to visible light (having wavelengths from about 390 nm to about 700 nm) and/or may be sensitive to NIR light (having wavelengths from about 700 nm to about 900 nm), and/or may be sensitive to IR light (having wavelengths from about 900 nm to about 1 mm), and/or may be sensitive to UV light (having wavelengths from about 100 nm to 400 nm).

Unless otherwise specified, with "light" is meant an electromagnetic wave having wavelengths in the range from about 10 nm to about 1 mm.

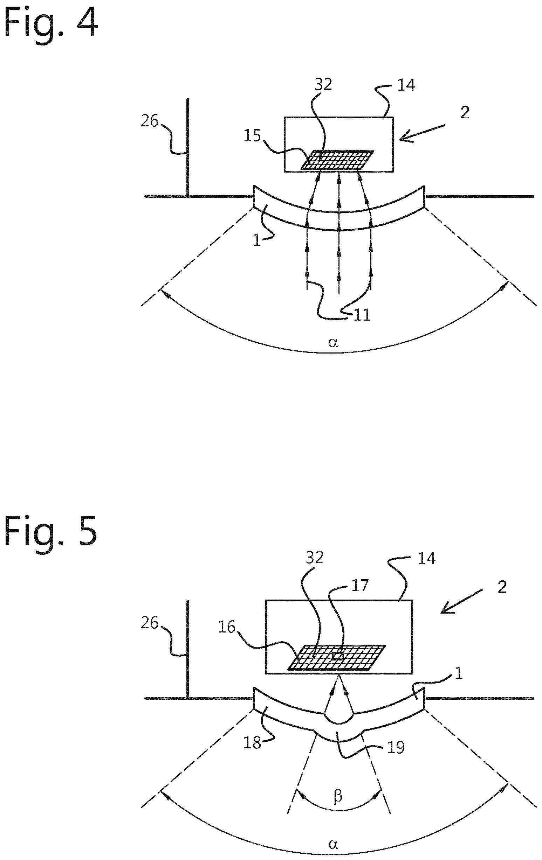

Figure 4 schematically illustrates a specific example of an optical receiver 2 and receiver optical element 1 as may be used in embodiments of a luminaire system 23, 23' according to the present invention.

In the embodiment of Figure 4, the optical receiver 2 comprises an image sensor 14 having a pixel array 15 with a plurality of pixels 32. The image sensor 14 may be part of a digital camera, which typically further comprises readout circuitry, and may further comprise an image compressor, etc.

The image sensor may for example be part of a HD camera or of a megapixel camera. The HD camera may have a resolution of at least 1280x720 pixels or at least 1920 x 1080 pixels and a frame rate of at least 25 or 30 Hz. The megapixel camera may have a resolution of at least 1280x720 pixels or at least 1920 x 1080 pixels and a frame rate of at least 3 Hz or at least 5 Hz.

Also other kinds of cameras or image sensors may be used, for example a 2D- image camera, or a 3D-image camera, or a time-of-light (TOF) camera, or a stereo-vision-camera, or an infra-red (IR) camera, or a near-infrared (NIR) camera, or a camera capable of detecting both visible light and infrared light, etc.

In the embodiment of Figure 4, a receiver optical element 1, e.g. a lens is arranged in front of the pixel array 15 for guiding incident light towards the pixel array 15. For example, the angle α may be a value in the range from about 20° to about 150°.

Figure 5 schematically illustrates a variant of the optical receiver and receiver lens arrangement shown in Figure 4, where the optical element 1, e.g. a lens, associated with the image sensor 14 has a first portion 18 for guiding visible light for capturing visible image information to a first region 16 of the image sensor 14, and where the lens 1 has a second portion 19 for guiding reflected or back scattered light to a second region 17 of the image sensor 14. The first portion 18 occupies a major portion of the lens area, for example at least 80%, while the second portion 19 occupies only a minor portion of the lens area, for example at most 20%. The first region 16 occupies a major portion of the pixel array 15, for example at least 80%, while the second region 17 occupies only a minor portion 17 of the pixel array 15. This allows simultaneous capturing of visible image information, such as e.g. traffic information, while at the same time capturing image data for determining weather related information, such as visibility and/or precipitation and/or state of the surface to be illuminated. In the example of Figure 5 the second portion 19 is arranged in the center of the lens 1, but that is not required. In an alternative embodiment, the second lens portion 19 is arranged off-center, for example at an edge or near the periphery of the lens 1. The second portion 19 preferably has another curvature than the first portion 18, and more in particular a smaller radius of curvature in order to focus the reflected or back scattered light to the second region 17. This will allow making the second region 17 smaller, whilst maintaining a good accuracy. In the example of Figure 5, the second lens portion 19 defines an angle β for example in the range from about 20° to about 40°. The angle α may be the same as in Figure 4.

Figure 6 shows an exemplary hardware block diagram of a luminaire system 23 according to the present invention. As described above, the luminaire system 23 comprises a plurality of light sources 6a, 6b, and at least one optical receiver 2, e.g. two optical receivers, and a control means 20. The plurality of light sources 6a, 6b may be mounted on a support 24, for example a PCB. The control means 20 may be a programmable device such as a programmable processor or a programmable microcontroller with internal and/or external memory, for example volatile memory (RAM) and non-volatile memory (e.g. ROM or EPROM of FLASH). The non-volatile memory may comprise computer executable instructions for determining weather related information, based on information obtained from the optical receiver 2, e.g. light sensor, or NIR sensor or image sensor.

The control means 20 is operatively connected to the optical receiver 2 in order to obtain data indicative of characteristics, for example an amplitude or a power spectrum of a light portion 11 which is reflected or back-scattered by e.g. particles 33 acting as diffusing sources or by the surface to be illuminated, but originating from one or more of the light sources 6a, 6b. This data may be received for all optical receiver elements (e.g. pixels of an image sensor) of the at least one optical receiver 2.

The light sources 6a, 6b may be activated or deactivated by means of one or more switches (not shown) or by means of a drive means 3. The drive means 3 may provide one or more predefined or controllable voltages and/or may provide one or more predefined or controllable currents. The drive means 3 may be controlled by the control means 20, for example based on the determined weather condition, and/or based on information received from a remote device, e.g. a remote server 28, and/or based on information obtained from other luminaire systems 27, for example neighboring lamp poles. The luminaire system 23 may optionally comprise a separate feeding means 34 for powering or controlling the at least one optical receiver 2. Alternatively the drive means 3 may be used.

In some embodiments, the luminaire system comprises at least two optical receivers: a first optical receiver having a first sensitivity spectrum, and a second optical receiver having a second sensitivity spectrum different from the first sensitivity spectrum.

The luminaire system 23 may further comprise wired or wireless or optical communication means 29 operatively connected to the control means 20, and adapted for communicating with one or more other luminaire systems 27, and/or for communicating with a remote server 28.

The control means 20 may be further adapted for transmitting the determined information or for transmitting the data, for example unprocessed data obtained from the at least one optical receiver 2, for example light sensor data or NIR sensor data or image or video stream data, through the communications means 29. The control means 20 may be further adapted for receiving information from at least one other luminaire system 27, for example from a neighboring lamp post, and/or from the remote device 28 such as a remote server, and may be configured to control the plurality of light sources 6, for example to activate (e.g. turn ON) or deactivate (e.g. turn OFF) or dim or change the shape of the light distribution or change the color or color temperature of the emitted light, based on the information received via the communication means 29. In case of conflicting information obtained from the optical receiver 2 and/or neighboring luminaire systems and/or the remote device 28, the control means may apply a majority voting technique in order to determine whether or not to activate or deactivate or dim or otherwise control the light sources 6 and/or the at least one optical receiver 2. Also, the control means 20 may be configured to only activate the optical receiver 2 of a luminaire in the event that predetermined information, such as predetermined weather information, is received. Further, the control means 20 may be configured to determine, based on received weather information, whether a detection by the at least one optical receiver 2 is accurate.

The control means 20 may be configured to control the light sources 6 to be subsequently in at least a first state and a second state different from the first state, and to control the optical receiver 2 such that the detection is performed at one or more first moments in time in the first state and at one or more second moments in time in the second state. For example, the first state may correspond to an activated state of at least one of the light sources 6, and the second state may correspond to a deactivated state of the at least one of the light sources 6. In another embodiment, the first state may correspond to an activated state of at least one of the light sources 6, and the second state may correspond to a dimmed state of the at least one of the light sources 6. In yet another embodiment, the first state may correspond to a deactivated state of at least one of the light sources 6, and a second state may correspond to a dimmed state of the at least one of the light sources 6. In yet another embodiment, the first state may correspond to a first dimmed state of at least one of the light sources 6, and a second state may correspond to a second dimmed state of the at least one of the light sources 6, said second dimmed state being different from the first dimmed state. In another embodiment, the first state may correspond to an activated (optionally dimmed) state of some of the light sources 6, and the second state may correspond to an activated (optionally dimmed) or deactivated state of all of the light sources 6. In another embodiment, the first state may correspond to at least one of the light sources 6 emitting a first portion of a modulated light beam, and the second state may correspond to the at least one of the light sources 6 emitting a second portion of a modulated light beam.

According to a further developed embodiment the control means 20 is configured to control the light sources 6 between at least a first state and a second state different from the first state, and to control the at least one optical receiver such that the detection is performed first at one or more first moments in time in the first state, subsequently at one or more second moments in time in the second state, and next at one or more third moments in time again in the first state. This allows to further increase the accuracy.

In a particular embodiment, the control means 20 is further adapted for repeatedly activating (during the day) or deactivating (during the night) at least one of the plurality of light sources 6 during a first time period smaller than 100 ms, or smaller than 10 ms, or even smaller than 1 ms, and for deactivating (during the day) or activating (during the night) said at least one light source 6 during a second time period longer than 900 ms, for example longer than 30 seconds or longer than 5 minutes. Such determination may be repeated throughout the day and the night. If the duration of the first period is sufficiently small, for example in the order of 1 ms or less, activation/deactivation is not visible for human beings, and thus not disturbing for pedestrians or drivers. The weather-related information may then be determined based on detection signals received both during the first and second time period such that the influence of external light sources can be removed.

A problem often encountered when measuring light information is that sunlight disturbs the signal significantly. In order to improve the accuracy of the system, the drive means 3 may be adapted to provide a modulated power signal to all or to at least one of the plurality of light sources 6 for creating a modulated light beam or a light beam with a modulated component. The luminaire system would then further comprise a demodulator for demodulating the signal received by the at least one optical receiver 2, and the control means 20 would be further adapted to extract said information based on the demodulated signal. It is noted that the demodulator may be a hardware component, or may be partly or fully implemented in the control means 20, for example in software. The demodulator may be present in the luminaire head but also in another location such as a remote server. It is noted that this embodiment corresponds with the example given above where the first state corresponds to at least one of the light sources 6 emitting a first portion of a modulated light beam, and the second state corresponds to the at least one of the light sources 6 emitting a second portion of a modulated light beam.

In a preferred embodiment, the modulated power signal provided by the drive means 3 is a pulse-width modulated (PWM) power signal. Such a signal is particularly suitable for driving LEDs.

Figure 7 illustrates schematically another exemplary embodiment of a luminaire system 23 of the invention. The luminaire system 23 comprises a support 24 comprising a plurality of light sources 6 for creating a light beam which is directed downwardly. The luminaire system 23 further comprises at least one optical receiver 2 configured for detecting a portion of the light beam which is reflected or back-scattered by diffusing sources 33 or by a surface S. Characteristics of this reflected or back-scattered light are indicative of weather conditions, in particular visibility and/or precipitation (e.g. snow, rain, fog, etc.), and/or of the state of the surface (e.g. covered with snow, covered with water, etc.) and/or of the distance H between the plurality of light sources 6 and the surface. The luminaire system 23 further comprises a control means (not shown in Figure 7 but see Figure 6) operatively connected (wired or wirelessly) to said at least one optical receiver 2 for obtaining data related to said detected light portion.

The optical receiver 2 comprises a plurality of optical receiving elements 32, e.g. corresponding with the pixels of an image sensor, wherein each optical receiving element 32 is configured to measure a light intensity of the detected portion of the light beam within a predetermined spectrum or within a plurality of predetermined spectra. When a plurality of optical receiving elements 32 is present, the optical receiving elements 32 may be arranged according to a regular pattern, for example an array with at least one row and at least two columns of optical receiving elements 32. Preferably the optical receiver comprises a row of optical receiver elements 32 extending along a line, and such that, in the mounted positon of the luminaire system, the light emitted by at least one of the plurality of light sources 6 is received on said line. This is schematically illustrated in Figure 7. A first light ray I1 is reflected on the surface S and the reflected ray O1 is received in a point P1 of the active surface area of the optical receiver 2. A second light ray I2 is reflected/back-scattered on diffusing sources 33 and the reflected/back-scattered ray O2 is received in a point P2 of the active surface area of the optical receiver 2. When the surface is lower than the surface S, see surface S', point P1 will shift to the left, see point P1'. When the surface is higher than the surface S, see surface S", point P1 will shift to the right, see point P1". In other words, the location of point P1, P1', P1" depends on the distance H between the plurality of light sources 6 and the surface S, S', S" where the light is reflected. Thus, the measurements performed by optical receiver elements 32 which are arranged along a line containing points P1, P1', P1", allow determining said distance H. Also, the state of the surface S, S', S" (e.g. concrete, bitume, snow, water, etc.) may influence the measured light intensity. More generally, changes in ambient visibility and/or precipitation and/or changes in a state of a surface to be illuminated and/or changed regarding the distance between said surface and the plurality of light sources, will influence the intensity and/or direction of the light beam which is reflected by diffusing sources and/or said surface. When a plurality of optical receiving elements 32 is used, both intensity and direction changes may be detected, allowing to determine information related to any one of the above mentioned conditions. For example, the measured intensity may indicate that it has started raining or that a surface is covered with snow. The control means 20 may be further configured to do a calibration upon installation. Also, the control means 20 may be configured to be self-learning, optionally taking into account received information, such as weather information, information about the surface, information about the height of the luminaire, etc.

Different algorithms may be used to determine said information.
- In an exemplary embodiment, the control means 20 is adapted for determining said information based on spatial analysis of image information obtained from the image sensor 14.
- In another exemplary embodiment, the control means 20 is adapted for determining said information based on spectral analysis of image information obtained from the image sensor 14. As is known in the art, individual pixels of an image sensor may be sensitive to different colors, for example Red, Green and Blue color components.
- In yet another exemplary embodiment, the control means 20 is adapted for obtaining data from the optical receiver 2 at different moments in time, and for storing said data or processed data derived therefrom in a memory, and for determining said information based on a correlation, such as a temporal correlation of the stored data.

But other techniques may also be used and the techniques described above may be combined.

Whilst the principles of the invention have been set out above in connection with specific embodiments, it is to be understood that this description is merely made by way of example and not as a limitation of the scope of protection which is determined by the appended claims.

### REFERENCES:

1 receiver optical element
2 optical receiver
3 drive means
4 light beam
5 optical element associated with light sources
6 light sources
8 pole
9 wiring
10 wiring
11 back-scattered light
12 second light source
13 light source optical element (narrow beam)
14 image sensor
15 pixel array
16 first region of image sensor
17 second region of image sensor
18 first portion (of receiver optical element)
19 second portion (of receiver optical element)
20 control means
21 memory
23 luminaire system
24 support
25 luminaire head
26 light shield
27 other (e.g. neighboring) luminaire system
28 remote device
29 communication means
31 second light beam (narrow beam)
32 pixel
33 particles
34 feeding means
d distance

## Claims

1. A luminaire system (23) comprising:
- a support (24) comprising a plurality of light sources (6) for creating a light beam (4);
- at least one optical receiver (2) configured for detecting a portion (11) of the light beam (4) which is reflected or back-scattered;
- a control means (20) operatively connected to said at least one optical receiver (2) for obtaining data related to said detected light beam portion (11), and configured for determining, based on the obtained data, information related to at least one of: ambient visibility, precipitation, a state of a surface intended to be illuminated by the luminaire system, a distance between the plurality of light sources and said surface
**characterized in that** the control means (20) is configured to control the plurality of light sources (6) to be subsequently in at least a first state and a second state different from the first state, and to control the at least one optical receiver (2) such that the detection is performed at one or more first moments in time in the first state and at one or more second moments in time in the second state, wherein the control means (20) is configured to obtain the information based on a difference between the detection at the one or more first moments in time in the first state and the detection at the one or more second moments in time in the second state.

2. The luminaire system (23) according to claim 1, further comprising a housing accommodating said support (24) and said at least one optical receiver (2).

3. The luminaire system (23) according to claim 2, wherein the housing is adapted for preventing a direct optical path between the plurality of light sources (6) and the at least one optical receiver (2),
wherein preferably the housing comprises a cavity (30) accommodating said at least one optical receiver (2) or a light shield (26) arranged between the plurality of light sources (6) and the at least one optical receiver (2).

4. The luminaire system (23) according to claim 1, wherein any one or more of the following is applicable:
- the first state corresponds to an activated state of at least one of the plurality of light sources, and the second state corresponds to a deactivated state of the at least one of the plurality of light sources;
- the first state corresponds to an activated state of at least one of the plurality of light sources, and the second state corresponds to a dimmed state of the at least one of the plurality of light sources;
- the first state corresponds to a deactivated state of at least one of the plurality of light sources, and the second state corresponds to a dimmed state of the at least one of the plurality of light sources;
- the first state corresponds to an activated state of only some of the plurality of light sources, and the second state corresponds to an activated or deactivated state of all of the plurality of light sources;
- the first state corresponds to at least one of the plurality of light sources emitting a first portion of a modulated light beam, and the second state corresponds to the at least one of the plurality of light sources emitting a second portion of a modulated light beam;
- the first state corresponds to a first dimmed state of at least one of the plurality of light sources, and the second state corresponds to a second dimmed state of the at least one of the plurality of light sources, said second dimmed state being different from said first dimmed state.

5. The luminaire system (23) according to any of the previous claims, wherein the control means (20) is further adapted for repeatedly activating at least one of the plurality of light sources (6, 12) in the first state for emitting a light beam (4, 31) during a first time period smaller than 100 ms, and for deactivating said at least one light source (6, 12) in the second state during a second time period in between two first time periods, said second time period being larger than 900 ms, in a non-lighting-mode of the luminaire system; and/or
wherein the control means (20) is further adapted for repeatedly deactivating at least one of the plurality of light sources (6, 12) in the first state during a first time period smaller than 100 ms, and for activating said at least one light source (6, 12) in the second state during a second time period in between two first time periods, said second time period being larger than 900 ms, in a lighting-mode of the luminaire system;
wherein the control means is configured to control the at least one optical receiver such that the detection is performed during the first and second time periods.

6. The luminaire system (23) according to any of the previous claims, further comprising a drive means (3) for powering said plurality of light sources (6),
wherein preferably the drive means (3) is adapted for providing a modulated power signal, preferably a pulse-width modulated power signal, to all or to at least one of the plurality of light sources (6, 12) for creating a modulated light beam or a light beam with a modulated component, and the luminaire system further comprises a demodulator for demodulating a signal obtained from the at least one optical receiver (2), and the control means (20) is further adapted for extracting said information based on the demodulated signal.

7. The luminaire system (23) according to any of the previous claims, wherein each or at least some of the plurality of light sources (6) comprise a plurality of light emitting elements and/or further comprising a plurality of optical elements (5) associated with the plurality of light sources (6) and/or
wherein the control means (20) is further configured to control the plurality of light sources (6) based on the determined information and/or
wherein the at least one optical receiver (2) is arranged at a predefined distance from the plurality of light sources (6).

8. The luminaire system (23) according to any of the previous claims, wherein the plurality of light sources (6) comprises at least one first light source adapted for generating light having a first spectrum and at least one second light source (12) adapted for generating light having a second spectrum different from the first spectrum;
wherein preferably the second spectrum has light components in one or more of the following bands: the ultra-violet band, the visible spectrum band, the near-infra-red band, and the infra-red band or wherein preferably the second light source (12) is a laser, or a pulsed laser.

9. The luminaire system (23) according to any of the previous claims, further comprising a feeding means (34) for powering said at least one optical receiver (2) and/or wherein the at least one optical receiver (2) comprises a photo diode and/or a photodiode array and/or a camera and/or an image sensor (14), wherein preferably the camera comprises a 2D- image camera, and/or a 3D-image camera, and/or a time-of-flight camera, and/or a stereo-vision-camera, and/or an infra-red camera, and/or a near-infrared camera, and/or a camera configured to detect both visible light and infrared light.

10. The luminaire system (23) according to claim 9,
wherein the at least one optical receiver (2) comprises a camera and/or an image sensor (14);
wherein the control means (20) is adapted for determining said information based on spatial analysis of image information obtained from the camera and/or image sensor (14); and/or
wherein the control means (20) is adapted for determining said information based on spectral analysis of image information obtained from the camera and/or image sensor (14).

11. The luminaire system (23) according to any of the previous claims,
further comprising a memory (21) operatively connected to the control means (20);
and wherein the control means (20) is adapted for storing data received from the optical receiver (2) at different moments in time, or for storing processed data based on said received data, and is further adapted for determining said information based on said stored data and/or
further comprising wired or wireless or optical communication means (29) for communicating with other luminaire systems (27) and/or for communicating with a remote device (28);
and wherein the control means (20) is further adapted for transmitting the determined information or data obtained from the at least one optical receiver (2) via the communications means (29); the control means (20) is preferably further adapted for receiving information from at least one other luminaire system (27) and/or from the remote device (28), and further configured to further control the plurality of light sources (6, 12) and/or the at least one optical receiver based on the information received via the communication means (29).

12. A luminaire head (25) comprising the luminaire system (23) according to any of the previous claims.

13. A lamp pole comprising, the luminaire system (23) of any of claims 1 to 11, the lamp pole comprising:
- a luminaire head configured to accommodate at least said support (24) and said at least one optical receiver (2), and
- a support pole (8) configured to support said luminaire head (25).

14. The luminaire system (23) according to any one of the claims 1-11, wherein the support (24) comprises a printed circuit board and/or
wherein the information comprises information about a distance between the surface and the plurality of light sources, wherein the optical receiver comprises a plurality of optical receiving elements arranged across a surface of the optical receiver and configured to detect the reflected light beam, and wherein the obtained data comprises the detected reflected light beam.

15. The luminaire system (23) according any one of the claims 1-11, 14, further comprising a receiver optical element (1) associated with the at least one optical receive (2), wherein the receiver optical element has a first portion for guiding visible light to a first region of the at least one optical receiver, and a second portion for guiding the reflected or back scattered light to a second region of the at least one optical receiver.

## Patentansprüche

1. Leuchtensystem (23), umfassend:
- eine Halterung (24), umfassend eine Vielzahl von Lichtquellen (6) zum Erzeugen eines Lichtstrahls (4);
- mindestens einen optischen Empfänger (2), der zum Erfassen eines Teils (11) des Lichtstrahls (4), der reflektiert oder zurückgestreut wird, konfiguriert ist;
- ein Steuermittel (20), das mit dem mindestens einen optischen Empfänger (2) zum Erhalten von Daten, die sich auf den erfassten Lichtstrahlteil (11) beziehen, wirkverbunden und zum Bestimmen, basierend auf den erhaltenen Daten, von Informationen konfiguriert ist, die sich auf mindestens eines beziehen von: Umgebungssichtbarkeit, Niederschlag, einem Zustand einer Oberfläche, die vorgesehen ist, um mittels des Leuchtensystems beleuchtet zu werden, einem Abstand zwischen der Vielzahl von Lichtquellen und der Oberfläche,
**dadurch gekennzeichnet, dass** das Steuermittel (20) konfiguriert ist, um die Vielzahl von Lichtquellen (6) zu steuern, um nacheinander in mindestens einem ersten Zustand und einem zweiten Zustand, der sich von dem ersten Zustand unterscheidet, zu sein, und um den mindestens einen optischen Empfänger (2) derart zu steuern, dass die Erfassung zu einem oder mehreren ersten Zeitpunkten in dem ersten Zustand und zu einem oder mehreren zweiten Zeitpunkten in dem zweiten Zustand durchgeführt wird, wobei das Steuermittel (20) konfiguriert ist, um die Informationen basierend auf einem Unterschied zwischen der Erfassung zu dem einen oder den mehreren ersten Zeitpunkten in dem ersten Zustand und der Erfassung zu dem einen oder den mehreren zweiten Zeitpunkten in dem zweiten Zustand zu erhalten.

2. Leuchtensystem (23) nach Anspruch 1, ferner umfassend ein Gehäuse, das die Halterung (24) und den mindestens einen optischen Empfänger (2) aufnimmt.

3. Leuchtensystem (23) nach Anspruch 2, wobei das Gehäuse zum Verhindern eines direkten optischen Wegs zwischen der Vielzahl von Lichtquellen (6) und dem mindestens einen optischen Empfänger (2) angepasst ist,
wobei vorzugsweise das Gehäuse einen Hohlraum (30) umfasst, der den mindestens einen optischen Empfänger (2) oder einen Lichtschutz (26), der zwischen der Vielzahl von Lichtquellen (6) und dem mindestens einen optischen Empfänger (2) angeordnet ist, aufnimmt.

4. Leuchtensystem (23) nach Anspruch 1, wobei ein beliebiges oder mehrere der folgenden zutreffend ist:
- der erste Zustand entspricht einem aktivierten Zustand mindestens einer der Vielzahl von Lichtquellen und der zweite Zustand entspricht einem deaktivierten Zustand der mindestens einen der Vielzahl von Lichtquellen;
- der erste Zustand entspricht einem aktivierten Zustand mindestens einer der Vielzahl von Lichtquellen und der zweite Zustand entspricht einem gedimmten Zustand der mindestens einen der Vielzahl von Lichtquellen;
- der erste Zustand entspricht einem deaktivierten Zustand mindestens einer der Vielzahl von Lichtquellen und der zweite Zustand entspricht einem gedimmten Zustand der mindestens einen der Vielzahl von Lichtquellen;
- der erste Zustand entspricht einem aktivierten Zustand nur einiger der Vielzahl von Lichtquellen und der zweite Zustand entspricht einem aktivierten oder deaktivierten Zustand aller der Vielzahl von Lichtquellen;
- der erste Zustand entspricht mindestens einer der Vielzahl von Lichtquellen, die einen ersten Teil eines modulierten Lichtstrahls emittiert, und der zweite Zustand entspricht der mindestens einen der Vielzahl von Lichtquellen, die einen zweiten Teil eines modulierten Lichtstrahls emittiert;
- der erste Zustand einem ersten gedimmten Zustand mindestens einer der Vielzahl von Lichtquellen entspricht und der zweite Zustand einem zweiten gedimmten Zustand der mindestens einen der Vielzahl von Lichtquellen entspricht, wobei sich der zweite gedimmte Zustand von dem ersten gedimmten Zustand unterscheidet.

5. Leuchtensystem (23) nach einem der vorstehenden Ansprüche, wobei das Steuermittel (20) ferner zum wiederholten Aktiveren mindestens einer der Vielzahl von Lichtquellen (6, 12) in dem ersten Zustand zum Emittieren eines Lichtstrahls (4, 31) während eines ersten Zeitraums kleiner als 100 ms und zum Deaktivieren der mindestens einen Lichtquelle (6, 12) in dem zweiten Zustand während eines zweiten Zeitraums zwischen zwei ersten Zeiträumen, wobei der zweite Zeitraum größer als 900 ms ist, in einem Nichtbeleuchtungsmodus des Leuchtensystems, angepasst ist; und/oder
wobei das Steuermittel (20) ferner zum wiederholten Deaktivieren mindestens einer der Vielzahl von Lichtquellen (6, 12) in dem ersten Zustand während eines ersten Zeitraums kleiner als 100 ms und zum Aktivieren der mindestens einen Lichtquelle (6, 12) in dem zweiten Zustand während eines zweiten Zeitraums zwischen zwei ersten Zeiträumen, wobei der zweite Zeitraum größer als 900 ms ist, in einem Beleuchtungsmodus des Leuchtensystems, angepasst ist;
wobei das Steuermittel konfiguriert ist, um den mindestens einen optischen Empfänger derart zu steuern, dass die Erfassung während des ersten und des zweiten Zeitraums durchgeführt wird.

6. Leuchtensystem (23) nach einem der vorstehenden Ansprüche, ferner umfassend ein Ansteuerungsmittel (3) zum Versorgen der Vielzahl von Lichtquellen (6) mit Leistung,
wobei vorzugsweise das Ansteuerungsmittel (3) zum Bereitstellen eines modulierten Leistungssignals, vorzugsweise ein pulsweitenmoduliertes Leistungssignal, an alle oder an mindestens eine der Vielzahl von Lichtquellen (6, 12) zum Erzeugen eines modulierten Lichtstrahls oder eines Lichtstrahl mit einer modulierten Komponente angepasst ist, und das Leuchtensystem ferner einen Demodulator zum Demodulieren eines Signals, das von dem mindestens einen optischen Empfänger (2) erhalten wird, umfasst, und das Steuermittel (20) ferner zum Extrahieren der Informationen basierend auf dem demodulierten Signal angepasst ist.

7. Leuchtensystem (23) nach einem der vorstehenden Ansprüche, wobei jede oder mindestens einige der Vielzahl von Lichtquellen (6) eine Vielzahl von lichtemittierenden Elementen umfassen und/oder ferner umfassend eine Vielzahl von optischen Elementen (5), die der Vielzahl von Lichtquellen (6) zugeordnet ist, und/oder
wobei das Steuermittel (20) ferner konfiguriert ist, um die Vielzahl von Lichtquellen (6) basierend auf den bestimmten Informationen zu steuern, und/oder
wobei der mindestens eine optische Empfänger (2) in einem vordefinierten Abstand von der Vielzahl von Lichtquellen (6) angeordnet ist.

8. Leuchtensystem (23) nach einem der vorstehenden Ansprüche, wobei die Vielzahl von Lichtquellen (6) mindestens eine erste Lichtquelle, die zum Generieren von Licht, das ein erstes Spektrum aufweist, angepasst ist, und mindestens eine zweite Lichtquelle (12) umfasst, die zum Generieren von Licht angepasst ist, das ein zweites Spektrum, das sich von dem ersten Spektrum unterscheidet, aufweist;
wobei vorzugsweise das zweite Spektrum Lichtkomponenten in einem oder mehreren der folgenden Bänder aufweist: dem Ultraviolettband, dem Band eines sichtbaren Spektrums, dem Nahinfrarotband und dem Infrarotband oder wobei vorzugsweise die zweite Lichtquelle (12) ein Laser oder ein gepulster Laser ist.

9. Leuchtensystem (23) nach einem der vorstehenden Ansprüche, ferner umfassend ein Speisemittel (34) zum Versorgen des mindestens einen optischen Empfängers (2) mit Leistung und/oder wobei der mindestens eine optische Empfänger (2) eine Fotodiode und/oder ein Fotodiodenarray und/oder eine Kamera und/oder einen Bildsensor (14) umfasst, wobei vorzugsweise die Kamera eine 2D-Bildkamera und/oder eine 3D-Bildkamera und/oder eine Laufzeitkamera und/oder eine Stereovisionskamera und/oder eine Infrarotkamera und/oder eine Nahinfrarotkamera und/oder eine Kamera umfasst, die konfiguriert ist, um sowohl sichtbares Licht als auch Infrarotlicht zu erfassen.

10. Leuchtensystem (23) nach Anspruch 9, wobei der mindestens eine optische Empfänger (2) eine Kamera und/oder einen Bildsensor (14) umfasst;
wobei das Steuermittel (20) zum Erfassen der Informationen basierend auf einer räumlichen Analyse von Bildinformationen, die von der Kamera und/oder dem Bildsensor (14) erhalten werden, angepasst ist; und/oder
wobei das Steuermittel (20) zum Bestimmen der Informationen basierend auf einer spektralen Analyse von Bildinformationen, die von der Kamera und/oder dem Bildsensor (14) erhalten werden, angepasst ist.

11. Leuchtensystem (23) nach einem der vorstehenden Ansprüche,
ferner umfassend einen Speicher (21), der mit dem Steuermittel (20) wirkverbunden ist;
und wobei das Steuermittel (20) zum Speichern von Daten, die von dem optischen Empfänger (2) zu unterschiedlichen Zeitpunkten empfangen werden, oder zum Speichern von verarbeiteten Daten basierend auf den empfangenen Daten angepasst ist und ferner zum Bestimmen der Informationen basierend auf den gespeicherten Daten angepasst ist, und/oder
ferner umfassend ein drahtgebundenes oder drahtloses oder optisches Kommunikationsmittel (29) zum Kommunizieren mit anderen Leuchtensystemen (27) und/oder zum Kommunizieren mit einer entfernten Vorrichtung (28);
und wobei das Steuermittel (20) ferner zum Übertragen der bestimmten Informationen oder Daten, die von dem mindestens einen optischen Empfänger (2) erhalten werden, durch das Kommunikationsmittel (29) angepasst ist; das Steuermittel (20) vorzugsweise ferner zum Empfangen von Informationen von mindestens einem anderen Leuchtensystem (27) und/oder von der entfernten Vorrichtung (28) angepasst und ferner konfiguriert ist, um ferner die Vielzahl von Lichtquellen (6, 12) und/oder den mindestens einen optischen Empfänger basierend auf den Informationen, die durch das Kommunikationsmittel (29) empfangen werden, zu steuern.

12. Leuchtenkopf (25), umfassend das Leuchtensystem (23) nach einem der vorstehenden Ansprüche.

13. Lampenmast, umfassend das Leuchtensystem (23) nach einem der Ansprüche 1 bis 11, der Lampenmast umfassend:
- einen Leuchtenkopf, der konfiguriert ist, um mindestens die Halterung (24) und den mindestens einen optischen Empfänger (2) aufzunehmen, und
- einen Haltemast (8), der konfiguriert ist, um den Leuchtenkopf (25) zu halten.

14. Leuchtensystem (23) nach einem der Ansprüche 1 bis 11, wobei die Halterung (24) eine Leiterplatte umfasst und/oder
wobei die Informationen Informationen über einen Abstand zwischen der Oberfläche und der Vielzahl von Lichtquellen umfassen, wobei der optische Empfänger eine Vielzahl von optischen Empfangselementen umfasst, die quer über eine Oberfläche des optischen Empfängers angeordnet und konfiguriert sind, um den reflektierten Lichtstrahl zu erfassen, und wobei die erhaltenen Daten den erfassten reflektierten Lichtstrahl umfassen.

15. Leuchtensystem (23) nach einem der Ansprüche 1 bis 11, 14, ferner umfassend ein optisches Empfängerelement (1), das dem mindestens einen optischen Empfänger (2) zugeordnet ist, wobei das optische Empfängerelement einen ersten Teil zum Leiten von sichtbarem Licht zu einem ersten Bereich des mindestens einen optischen Empfängers und einen zweiten Teil zum Leiten des reflektierten oder zurückgestreuten Lichts zu einem zweiten Bereich des mindestens einen optischen Empfängers aufweist.

## Revendications

1. Système de luminaire (23) comprenant :
- un support (24) comprenant une pluralité de sources lumineuses (6) pour créer un faisceau lumineux (4) ;
- au moins un récepteur optique (2) configuré pour détecter une partie (11) du faisceau lumineux (4) qui est réfléchie ou rétrodiffusée ;
- un moyen de commande (20) relié fonctionnellement audit au moins un récepteur optique (2) pour obtenir des données relatives à ladite partie de faisceau lumineux détectée (11), et configuré pour déterminer, sur la base des données obtenues, des informations relatives à au moins l'un des éléments suivants : la visibilité ambiante, les précipitations, l'état d'une surface destinée à être éclairée par le système de luminaire, la distance entre la pluralité de sources lumineuses et ladite surface
**caractérisé en ce que** le moyen de commande (20) est configuré pour commander la pluralité de sources lumineuses (6) pour qu'elles soient ensuite dans au moins un premier état et un second état différent du premier état, et pour commander l'au moins un récepteur optique (2) de sorte que la détection est effectuée à un ou plusieurs premiers moments dans le premier état et à un ou plusieurs seconds moments dans le second état, dans lequel le moyen de commande (20) est configuré pour obtenir les informations sur la base d'une différence entre la détection aux un ou plusieurs premiers moments dans le premier état et la détection aux un ou plusieurs seconds moments dans le second état.

2. Système de luminaire (23) selon la revendication 1, comprenant en outre un boîtier accueillant ledit support (24) et ledit au moins un récepteur optique (2).

3. Système de luminaire (23) selon la revendication 2, dans lequel le boîtier est conçu pour empêcher un chemin optique direct entre la pluralité de sources lumineuses (6) et l'au moins un récepteur optique (2),
dans lequel, de préférence, le boîtier comprend une cavité (30) accueillant ledit au moins un récepteur optique (2) ou un écran de lumière (26) disposé entre la pluralité de sources lumineuses (6) et l'au moins un récepteur optique (2).

4. Système de luminaire (23) selon la revendication 1, dans lequel l'un ou plusieurs parmi ce qui suit sont applicables :
- le premier état correspond à un état activé d'au moins une de la pluralité de sources lumineuses, et le second état correspond à un état désactivé de l'au moins une de la pluralité de sources lumineuses ;
- le premier état correspond à un état activé d'au moins une de la pluralité de sources lumineuses, et le second état correspond à un état atténué de l'au moins une de la pluralité de sources lumineuses ;
- le premier état correspond à un état désactivé d'au moins une de la pluralité de sources lumineuses, et le second état correspond à un état atténué de l'au moins une de la pluralité de sources lumineuses ;
- le premier état correspond à un état activé de certaines seulement de la pluralité de sources lumineuses, et le second état correspond à un état activé ou désactivé de l'ensemble de la pluralité de sources lumineuses ;
- le premier état correspond à au moins une de la pluralité de sources lumineuses émettant une première partie d'un faisceau lumineux modulé, et le second état correspond à l'au moins une de la pluralité de sources lumineuses émettant une seconde partie d'un faisceau lumineux modulé ;
- le premier état correspond à un premier état atténué d'au moins une de la pluralité de sources lumineuses, et le second état correspond à un second état atténué de l'au moins une de la pluralité de sources lumineuses, ledit second état atténué étant différent dudit premier état atténué.

5. Système de luminaire (23) selon l'une quelconque des revendications précédentes, dans lequel le moyen de commande (20) est en outre conçu pour activer de manière répétée au moins une de la pluralité de sources lumineuses (6, 12) dans le premier état pour émettre un faisceau lumineux (4, 31) pendant une première période de temps inférieure à 100 ms, et pour désactiver ladite au moins une source lumineuse (6, 12) dans le second état pendant une seconde période de temps entre deux premières périodes de temps, ladite seconde période de temps étant supérieure à 900 ms, dans un mode de non-éclairage du système de luminaire ; et/ou
dans lequel le moyen de commande (20) est en outre conçu pour désactiver de manière répétée au moins une de la pluralité de sources lumineuses (6, 12) dans le premier état pendant une première période de temps inférieure à 100 ms, et pour activer ladite au moins une source lumineuse (6, 12) dans le second état pendant une seconde période de temps entre deux premières périodes de temps, ladite seconde période de temps étant supérieure à 900 ms, dans un mode d'éclairage du système de luminaire ;
dans lequel le moyen de commande est configuré pour commander l'au moins un récepteur optique de manière à ce que la détection soit effectuée au cours des première et deuxième périodes.

6. Système de luminaire (23) selon l'une quelconque des revendications précédentes, comprenant en outre un moyen de pilotage (3) pour alimenter ladite pluralité de sources lumineuses (6),
dans lequel, de préférence, le moyen de pilotage (3) est conçu pour fournir un signal de puissance modulé, de préférence un signal de puissance modulé en largeur d'impulsion, à toutes les sources lumineuses (6, 12) ou à au moins l'une de la pluralité de celles-ci pour créer un faisceau lumineux modulé ou un faisceau lumineux avec une composante modulée, et le système de luminaire comprend en outre un démodulateur pour démoduler un signal obtenu à partir de l'au moins un récepteur optique (2), et le moyen de commande (20) est en outre conçu pour extraire lesdites informations sur la base du signal démodulé.

7. Système de luminaire (23) selon l'une quelconque des revendications précédentes, dans lequel chacune ou au moins certaines de la pluralité de sources lumineuses (6) comprennent une pluralité d'éléments émetteurs de lumière et/ou comprennent en outre une pluralité d'éléments optiques (5) associés à la pluralité de sources lumineuses (6) et/ou
dans lequel le moyen de commande (20) est en outre configuré pour commander la pluralité de sources lumineuses (6) sur la base des informations déterminées et/ou
dans lequel l'au moins un récepteur optique (2) est disposé à une distance prédéfinie de la pluralité de sources lumineuses (6).

8. Système de luminaire (23) selon l'une quelconque des revendications précédentes, dans lequel la pluralité de sources lumineuses (6) comprend au moins une première source lumineuse conçue pour générer une lumière ayant un premier spectre et au moins une deuxième source lumineuse (12) conçue pour générer une lumière ayant un deuxième spectre différent du premier spectre ;
dans lequel, de préférence, le deuxième spectre a des composantes lumineuses dans une ou plusieurs des bandes suivantes : la bande des ultraviolets, la bande du spectre visible, la bande des infrarouges proches et la bande des infrarouges ou dans lequel, de préférence, la deuxième source lumineuse (12) est un laser ou un laser à impulsions.

9. Système de luminaire (23) selon l'une quelconque des revendications précédentes, comprenant en outre un moyen d'alimentation (34) pour alimenter ledit au moins un récepteur optique (2) et/ou dans lequel l'au moins un récepteur optique (2) comprend une photodiode et/ou un réseau de photodiodes et/ou une caméra et/ou un capteur d'image (14), dans lequel la caméra comprend de préférence une caméra d'image 2D, et/ou une caméra d'image 3D, et/ou une caméra à temps de vol, et/ou une caméra à vision stéréoscopique, et/ou une caméra infrarouge, et/ou une caméra infrarouge proche, et/ou une caméra configurée pour détecter à la fois la lumière visible et la lumière infrarouge.

10. Système de luminaire (23) selon la revendication 9, dans lequel l'au moins un récepteur optique (2) comprend une caméra et/ou un capteur d'image (14) ;
dans lequel le moyen de commande (20) est conçu pour déterminer lesdites informations sur la base d'une analyse spatiale d'informations d'image obtenues à partir de la caméra et/ou du capteur d'image (14) ; et/ou
dans lequel le moyen de commande (20) est conçu pour déterminer lesdites informations sur la base d'une analyse spectrale d'informations d'image obtenues à partir de la caméra et/ou du capteur d'image (14).

11. Système de luminaire (23) selon l'une quelconque des revendications précédentes,
comprenant en outre une mémoire (21) reliée fonctionnellement au moyen de commande (20) ;
et dans lequel le moyen de commande (20) est conçu pour stocker des données reçues à partir du récepteur optique (2) à différents moments dans le temps, ou pour stocker des données traitées sur la base desdites données reçues, et est en outre conçu pour déterminer lesdites informations sur la base desdites données stockées et/ou
comprenant en outre des moyens de communication filaires, sans fil ou optiques (29) pour communiquer avec d'autres systèmes de luminaires (27) et/ou pour communiquer avec un dispositif distant (28) ;
et dans lequel le moyen de commande (20) est en outre conçu pour transmettre les informations déterminées ou des données obtenues à partir de l'au moins un récepteur optique (2) par l'intermédiaire du moyen de communication (29) ; le moyen de commande (20) est de préférence conçu pour recevoir des informations à partir d'au moins un autre système de luminaire (27) et/ou du dispositif distant (28), et configuré en outre pour commander la pluralité de sources lumineuses (6, 12) et/ou l'au moins un récepteur optique sur la base des informations reçues par l'intermédiaire du moyen de communication (29).

12. Tête de luminaire (25) comprenant le système de luminaire (23) selon l'une quelconque des revendications précédentes.

13. Mât d'éclairage comprenant le système de luminaire (23) selon l'une quelconque des revendications 1 à 11, le mât d'éclairage comprenant :
- une tête de luminaire configurée pour accueillir au moins ledit support (24) et ledit au moins un récepteur optique (2), et
- un mât de support (8) configuré pour supporter ladite tête de luminaire (25).

14. Système de luminaire (23) selon l'une quelconque des revendications 1 à 11, dans lequel le support (24) comprend une carte de circuit imprimé et/ou
dans lequel les informations comprennent des informations sur la distance entre la surface et la pluralité de sources lumineuses, dans lequel le récepteur optique comprend une pluralité d'éléments de réception optique disposés sur une surface du récepteur optique et configurés pour détecter le faisceau lumineux réfléchi, et dans lequel les données obtenues comprennent le faisceau lumineux réfléchi détecté.

15. Système de luminaire (23) selon l'une quelconque des revendications 1 à 11, 14, comprenant en outre un élément optique récepteur (1) associé à l'au moins un récepteur optique (2), dans lequel l'élément optique récepteur a une première partie pour guider la lumière visible vers une première région de l'au moins un récepteur optique, et une seconde partie pour guider la lumière réfléchie ou rétrodiffusée vers une seconde région de l'au moins un récepteur optique.
